# EUROPEAN PATENT SPECIFICATION

(11) **EP 1 664 262 B1**
(45) Date of publication and mention of the grant of the patent: **30.06.2010**
(21) Application number: 04783767.9
(22) Date of filing: 10.09.2004
(51) Int. Cl.: C12H 1/14, A23L 2/52, C12C 5/00, C12C 5/02, A23L 1/00, A23C 9/152, A23F 5/24, A23F 3/16

(54) **THE USE OF LABIATAE HERB PREPARATIONS FOR FOAM ENCHANCEMENT OF BEVERAGES**
VERWENDUNG VON LABIATAE-KRÄUTERZUBEREITUNGEN ZUR VERBESSERUNG DES SCHAUMES VON GETRÄNKEN
UTILISATION DE PREPARATIONS D HERBES DE LABIACEES POUR AMELI ORER L EFFET MOUSSANT DE BOISSONS

(30) Priority: 12.09.2003 US 502769 P
(43) Date of publication of application: 07.06.2006
(73) Proprietor: KALAMAZOO HOLDINGS, INC., Kalamazoo, MI 49006 (US)
(72) Inventor: MENNETT, Randall, H., Portage, MI 49024 (US); BARREN, James, P., Kalamazoo, MI 49009 (US); BERDAHL, Donald, R., Lawton, MI 49065 (US); BARRETT, Polly, A., Kalamazoo, MI 49006 (US); HANER, Gregory, P., Kalamazoo, MI 49004 (US)
(74) Representative: Goddard, Christopher Robert
(86) International application number: PCT/US2004/029674
(87) International publication number: WO 2005/028610

(56) References cited:
- US-A- 2 712 500
- DATABASE WPI Section Ch, Week 198441 Derwent Publications Ltd., London, GB; Class D13, AN 1984-255718 XP002308721 & SU 1 074 475 A (MOSCOW NAT ECONOMY INST) 23 February 1984 (1984-02-23)
- MOIR M: "HOPS-A MILLENNIUM REVIEW" JOURNAL OF THE AMERICAN SOCIETY OF BREWING CHEMISTS, AMERICAN SOCIETY OF BREWING CHEMISTS, ST.PAUL, MN,, US, vol. 58, no. 4, 2000, pages 131-146, XP000991473 ISSN: 0361-0470
- "Green Chili Beerito" STOUT BILLY'S RECIPE BOOK, [Online] 11 December 1997 (1997-12-11), XP002308719 Retrieved from the Internet: URL:http://www.stoutbillys.com/stout/recip ens/(Flat)/258CA7C3.htm> [retrieved on 2004-12-01]
- ALFRED STEINHEIMER: "Hopfen und Malz, Gott erhalt's" ROSSTALER HEIMATBLÄTTER, MITTEILUNGEN DES HEIMATVEREINS ROSSTAL E.V., [Online] 12 October 2004 (2004-10-12), XP002308720 Retrieved from the Internet: URL:http://www.rosstal.de/vereine/heimatve rein/heimatblaetter/heft22.htm> [retrieved on 2004-12-01] & ALFRED STEINHEIMER: "Hopfen und Malz, Gott erhalt's" ROSSTALER HEIMATBLÄTTER, MITTEILUNGEN DES HEIMATVEREINS ROSSTAL E.V., vol. 22, no. II, 1990,

## Description

### FIELD OF THE INVENTION

The present invention is concerned with a method for enhancing the foam properties of a number of beverages by incorporating foam-enhancing formulations either to the finished beverage or into a step in the manufacture of the beverage.

### BACKGROUND OF THE INVENTION

The amount (volume), appearance, stability and mouthfeel of a foam or head associated with many beverages, such as beer, malt beverages, certain carbonated soft drinks, cappuccino, hot chocolate and certain flavored coffees and teas are aesthetic and quality parameters important to the consumer and manufacturer.

### Beer and Malt Beverages

Along with color and clarity, foam is an important visual attribute used by consumers to judge the quality of a malt beverage. A high quality beer foam can have a positive effect on the beer by increasing the creaminess of the mouthfeel of the beer when it is consumed and by enhancing the appearance of a freshly poured beer. If its slow collapse leaves a nice lacy pattern on the glass, it is considered a truly superior foam. This invention relates to methods and compositions for improving the foam of beer and other malt beverages. This application discloses methods and compositions that alter and improve the appearance, stability and collapse of a head of foam on a malt beverage and other beverages through the use of additives which do not impart flavor or other unwanted attributes.

Beer foam is the mass of gas bubbles in a liquid-film matrix that floats on the surface of a beer. Cream, head, froth, collar and suds are often encountered synonyms of the term foam. The formation of a head of foam on a glass of beer is due to the coagulation of colloidal gas particles in the films of froth that then remain stable for some length of time. This stable head on a glass of beer distinguishes it more than anything else from all other drinks.

In this application, the term "beer" is used according to the definition in 27 CFR Subpart B, Section 25.11, namely:
"beer, ale, porter, stout, and other similar fermented beverages (including sake or similar products) of any name or description containing one-half of one percent or more of alcohol by volume, brewed or produced from malt, wholly or in part, or from any substitute for malt."

Malt beverages are defined as in 27 CFR Subpart B Section 7.10, namely:
"A beverage made by the alcoholic fermentation of an infusion or decoction, or combination of both, in potable brewing water, of malted barley with hops, or their parts, or their products, and with or without other malted cereals, and with or without the addition of unmalted or prepared cereals, other carbohydrates or products prepared therefrom, and with or without the addition of carbon dioxide, and with or without other wholesome products suitable for human food consumption."

The term "malt beverages" includes such foam-forming, fermented malt beverages as beer, ale, dry beer, near beer, light beer, low alcohol beer, low calorie beer, porter, bock beer, stout, malt liquor, non-alcoholic malt beverages, beers from which alcohol has been removed, and the like. Unless otherwise noted, the term "beer" shall be used throughout this specification as a generic term and refers to the entire group of fermented malt beverages.

Although factors affecting beer foam attributes have been studied for a long time, the brewing industry is far from consensus on just how to consistently deliver a product with high quality foam. Foam quality, and by this we mean foam volume, stability, appearance, mouthfeel, and the like, depends upon a number of factors. Cling is another important foam property and is the ability of the foam to adhere to the side of the glass as the foam collapses. This effect is also known as lacing. Some of the important factors affecting foam include:
1) Protein level, although there is disagreement as to whether molecular weight, degree of hydrophobicity or other properties are of the most importance.
2) Bitterness. Hop bitter acids (isohumulones) and their reduced counterparts (dihydro-isohumulones, tetrahydro-isohumulones and hexahydro-isohumulones) are known to be an important factor in foam formation and stabilization. It is thought that they interact with and bridge between proteins through an as yet incompletely understood process.
3) Polyphenols. Whether hop-derived or malt-derived, certain polyphenols have been shown to affect beer foam. The interaction of polyphenols with proteins can lead to beer haze, an unwanted side effect, and brewers limit the amount of polyphenols in beer to avoid haze formation.
4) Melanoidins, the reaction products of proteins and sugars, have also been thought to be important in beer foam.
5) Gas concentration and identity. For standard lagers, carbon dioxide plays a significant role in foam formation and stability. Nitrogen gas has been used to create very fine beer foam in beers with low carbonation.

The need for this invention has been brought about by changes in both brewing practices (the adoption of high gravity brewing techniques) and consumer demands (a growing preference for lighter and less bitter beers). In order to increase efficiencies and lower costs in beer production, many breweries have adopted the technique known as high gravity brewing.

The high gravity method involves brewing a more concentrated feedstock by using higher concentrations of solids such as sugars during fermentation, followed by a dilution step at the end of the brewing process. The brewer obtains a higher overall throughput, effectively producing larger volumes of beer for the same time in the process. The use of high gravity brewing techniques is nearly essential for breweries to produce beer economically and many brewing companies are making this part of their production strategy [Bryce, J.H., Cooper, D.J., Stewart, G.G. "The Potential to Improve Foam Stability of High Gravity Brewed Beer", European Brewery Convention on Beer Foam Quality, Monograph 27, October 1998, pages 141-153.] Although economically attractive, the technique does create some problems. High gravity brewing produces beers that have good overall quality, but often have poor foam characteristics. This is thought to be due in part to high gravity brews having a lower level of important foam forming proteins as a result of the dilution step. Thus it becomes advantageous to have a method and compositions to improve foam quality in beers produced by the high gravity method.

Worldwide, consumers are choosing lighter and less bitter beers. Light beers and low-carbohydrate beers also suffer from having low amounts of foam and poor foam stability. In these products, as in many of the beers produced by the high gravity process, the foam collapses very quickly leaving the consumer with a "headless" beer. Compositions and methods that provide high quality, stable foam for light beers are highly desired. It is well known that hop bitter acids (isohumulones) enhance the foam characteristics of beers. These compounds and their reduced counterparts (dihydro-isohumulones, tetrahydro-isohumulones and hexahydro-isohumulones) are very bitter. The collateral level of bitterness they convey to the finished beer limits their use. Since consumers are showing a growing preference for less bitter beers, the problem of foam quality and stability is being exacerbated by the brewer's desire to reduce the level of hop bitter acids in his/her product.

### Carbonated Soft Drinks

In some carbonated soft drinks, such as root beer, cream soda, and birch beer, the presence of a head of foam is an important attribute. Carbonated soft drinks are defined as water-based beverages containing flavorings, sweetener, carbon dioxide and optionally colorings. Adding the foam-enhancing compositions of the present invention can change and improve the quality of the foam, as measured by amount (volume), duration, appearance and mouthfeel. The foam-enhancing effects of the present invention give manufacturers the ability to generate heads of foam on carbonated soft drinks that traditionally do not have them. For example, cola-flavored soft drinks with stable foam heads can be prepared easily using the teachings of the present invention. Some manufacturers might wish to be able to add a foamy head to beverages that are not traditionally associated with them as part of a product line extension.

### Cappuccino, Flavored Coffees, Teas and Hot Chocolate

Authentic cappuccino from a machine is made by adding foamed milk to black coffee thereby creating a white foam on the surface of the coffee. Adding the foam-enhancing compositions of the present invention to the milk or dairy product used in preparing the cappuccino can change the quality of the foam, as measured by amount, duration, appearance and mouthfeel. Likewise, the foam properties of flavored coffees and hot chocolate beverages prepared by processes whereby foamed milk or foamed flavorings are added to a base liquid can be enhanced using the present inventive formulations and methods.

We have discovered that certain constituents of *Labiatae* herb preparations have a surprising and novel ability to enhance and stabilize foam in a variety of beverages. In particular, we have found that carnosic acid (CA) and carnosol (CN) and related compounds show significant foam enhancing properties at concentrations as low as one ppm. Their foam enhancing properties occur at concentrations well below flavor threshold, so they can be used to good effect without imparting undesirable flavor to a beer, malt beverage, carbonated soft drinks, flavored coffee, hot chocolate or cappuccino. We have also found that carnosic acid and / or carnosol and /or other related *Labiatae* herb-based compounds stabilize and enhance the properties of other foam systems, such as whipped egg whites.

### DESCRIPTION OF THE RELATED ART

### Malt Beverages and Beer

Much work has been done to understand the factors contributing to foam characteristics, quality, enhancement and stability in beer. Three articles were chosen as representative of the state of the art, and the references therein provide a good background. Most of the work cited below comes from a review article by Bamforth [Bringing Matters to a Head: The Status of Research on Beer Foam" European Brewery Convention on Beer Foam Quality, Monograph 27, October 1998, pages 10-23]. We have found no references or claims that even remotely foreshadow our invention and therefore present it as a truly novel solution to the problem of poor foam quality in malt beverages.

Bamforth describes materials such as lipids and proteolytic enzymes as factors that have a negative effect on foam quality. He also reports that lipid transfer protein (LPT1) is believed to be the major component of beer foam. He further describes work by Lusk and co-workers that disclosed that LPT1 provided the best foam stability when reconstituted with iso-α-acids, carbon dioxide, ethanol and inorganic ions in model systems. Others have proposed that good foaming performance in beers is due to the interaction of more than one protein.

Hydrophobicity of beer polypeptides is proposed to be a major factor in foam stabilization, with the more hydrophobic polypeptides providing better foam characteristics. This theory has been supported by the work of Onishi and Proudlove [Onishi, A., Proudlove, M.O. Journal of the Science of Food and Agriculture, 1994, 65, 233-240] who also showed that propylene glycol alginate probably increases foam stability by increasing the hydrophobicity of beer polypeptides. However, it is also thought that the size of the polypeptides plays a role as well. This has not been entirely sorted out by the research community and there are some conflicting claims [Hollemans, M., Tonies, A.R.J.M. Proceedings of the European Brewery Convention Congress, Zurich, 1989, 561-568. b) Gibson, C.E., Evans, D.E., Proudlove, M.O. Ferment, 1996, 9, 81-84. c) Douma, A.C., Mocking-Bode, H.C.M., Koorijman, M., Stolzenbach, E., Orsel, R., Bekkers, A.C.A.P.A., Angelino, S.A.G.F. Proceedings of the European Brewery Convention Congress, Maastricht, 1997, 671-679. d) Horiuchi, S., Kouno, K., Yamashita, H., Mori, T. Yabuuchi, S. Proceedings of the 23rd Convention of the Institute of Brewing, Asia Pacific Section, 1994, 198. e) Sheehan, M., EvansE. Proceedings of the 25th Convention of the Institute of Brewing, Asia Pacific Section, 1998, 198. f) Lusk, L.T., Goldstein, H., Ryder, D. Journal of the American Society of Brewing Chemists, 1995, 53, 93-100.].

Lipid Binding Proteins act to protect beer foam by preventing destabilization via lipids [Onishi, A., Canterranne, E., Clarke, D.J., Proudlove, M.O. Proceedings of the European Brewery Convention Congress, Brussels, 1995, 553-560. and Clark, D.C., Wilde, P.J., Marion, D. Journal of the Institute of Brewing, 1994, 100, 23-25.].

Lusk has shown that melanoidans are capable of stabilizing foams and polysaccharides can produce foam, but they are unstable [Lusk, L.T., Goldstein, H., Ryder, D. Journal of the American Society of Brewing Chemists, 1995, 53, 93-100]. Melanoidans are complex mixtures of chemicals with incompletely defined structures that result from the Maillard reaction between amino acids and reducing sugars.

Polypeptides form the backbone of all beer foams and the role that other molecules play is to either reinforce the protein backbone (bitter compounds, metal ions [Bamforth, C.W., Canterranne, E., Chandley, P. , Onishi, A. Proceedings of the European Brewery Convention Congress, Oslo, 1993, 331-340.], melanoidans,) or to disrupt it (lipids and detergents). Added stabilizers such as propylene glycol alginate interfere with the action of disruptors, such as lipids, and prevent them from disrupting the backbone. It is interesting to note that separately proteins and surfactants (such as lipids and detergents) can provide good foams. However, when the two are present together the foam formed is of inferior quality because they act via different foam stabilization mechanisms [Sarker, D.K., Wilde, P.J. and Clark, D.C. Cereal Chemistry, 1994, 75, 493-4.99]. Bitter compounds such as iso-α-acids are thought to act by cross-linking polypeptides via hydrophobic and ion-dipole interactions [Simpson, W.J , Hughes, P.S., Cerevisiae & Biotechnology, 1994,19, 39-44]. The reduced iso-α-acids are more substantially foam active than their unreduced counterparts, but incorrect use of these materials can produce very unsightly foams [Goldstein, H., Ting, P. Proceedings of the European Brewery Convention Symposium on Hops, 1994, 141-164]. The concentrations at which they can be used at are limited, practically, by their bitterness.

Forster discovered that a range of hop-derived polyphenols had no effect on beer foam [Forster, A., Beck, B. Schmidt, R. Proceedings of the 24th Convention of the Institute of Brewing, Asia Pacific Section, 1996, 243], but that catechin promoted the foaming of lactoglobulin by cross-linking the protein [¹ Sarker, D.K., Wilde, P.J., Clark, D.C. Journal ofAgricultural and Food Chemistry, 1995, 43, 295-300]. However, in our studies catechin was found to have no foam effect in beer. Bamforth² remarked that, based on Forster's catechin study, it is surprising that there were not more reports on the influence of polyphenols on beer foam since brewers know that the oxidation products of polyphenols can cross-react with proteins to form haze. However, haze is an undesirable quality and our invention is unique in that our molecules are not the polyphenols that Bamforth refers to. Furthermore, our invention provides enhanced stabilization against haze in the presence of air. Additionally, in the absence of air, beer containing carnosol and carnosic acid have haze formation that is no worse than the control.

The home brewing community shares recipes on the internet. There are several recipes that feature the addition of herbs or spices into the brewing process for the purpose of obtaining a distinctive flavor. At the http://byo.com/feature/56.html website, adding thyme, basil, peppermint and rosemary to home brews is discussed. Directions are given for adding an ethanol extract or tincture of the spice made using vodka or a tea made from hot water in the case of peppermint. Other examples are listed at http:Hbyo.com/recipe/298.html and http://www.cs.csustan.edu/∼gcrawfor/beerfiles/holiday.html. At http://www.stoutbillys.com/stout/recipens/(Flat)/258CA7C3.htm there is a recipe for green chili beerito which refers in passing to sage beer. More generally Moir, M. Journal of the American Society of Brewing Chemists, 2000, 58(4), 131-146 discloses that herbs such as rosemary were used in brewing prior to the general adoption of hops. Steinheimer, A. "Hopfen und Malz, Gott erhalt's", retrievable from http://www.rosstal.de/vereine/heimatverein/heimatblaetter/heft22.htm, constitutes a history of brewing in a Frankish community and mentions anecdotally the existence of lavender-, balm-, clove-, juniper-, bay-, wormwood-sage-, caraway- and birch sap-flavored beers. In all such prior art the herbs or spices are added solely for the flavor they impart to beer. They are not added to improve foam, and no mention is made regarding any effects on foam or foam stability. They are added simply as a flavoring, at quantities well above the flavor threshold, to impart a flavor to the product. In contrast, our invention is a foam-enhancing method that does not impart flavor changes to the beverage.

Hsu, et al. (US 5,387,425) disclose a method and composition for enhancing the foam properties of malt beverages. The method comprises adding to the beverage an isohumulone extract in the amount of between about US. 2712500 discloses the use of a hydroxypropyl methyl cellulose for stabilising beer foam. 0.1 ppm and about 20 ppm by weight of the beverage and foaming proteins in the amount of between about 2 ppm and about 250 ppm by weight of the beverage. The fermented malt beverage foam-enhancing composition comprises a mixture of isohumulone extract and foaming proteins, wherein the ratio of isohumulone extract to foaming proteins is between about 1:about 1 and about 1:about 2500. Further disclosed is a beverage composition with enhanced foam properties which comprises (a) a fermented malt beverage, (b) an isohumulone (hop) extract, the extract comprising between about 0.1 ppm and about 20 ppm by weight of the fermented malt beverage; and (c) foaming proteins, the proteins comprising between about 2 ppm and about 250 ppm by weight of the fermented malt beverage.

Shah and Milner, PCT Int. Appl. WO 2003010277 A1 (2003) describe the use of a sugar polymer added in the brewing process to enhance body, foam and taste of a malt beverage.

Tripp, Rader, Rao and Ryder, PCT Int. Appl. (1996) WO 9612788 A1 teach a method of preparing a colorless clear beer using an added foam enhancer.

Geller (US 2,559,612) teaches the use of a purified alginate derivative to enhance foam stability in malt beverages.

Tripp *et al.,* in Published United States Patent Application 20040086580, have described compositions comprising, as a first component, a fraction derived from hops; and as a second component, at least one member selected from the group consisting of rosemary, an extract derived from rosemary, a compound derived from rosemary, a triterpene species, a diterpene lactone species, and tryptanthrin, that treat or inhibit pathological conditions associated with inflammatory response.

### Carbonated Soft Drinks

Dickinson and Stainsby [Food Technology, 1987, 41 (9), 74-81+116] review recent progress in the development of emulsions and foams.

Watanabe, Daido and Yoshihiro, PCT Int. Appl. (2003), WO 2003205610, produce a foam-holding agent that comprises a tea leaf extract enriched in catechins components.

San Martin [Proc. Phytochem. Soc. Eur. (2000) 45 (Saponins in Food, Feed and Medicinal Plants) 271-279] and Briones [Econ. Bot. (1999) 53(3), 302-311] in a general review article, describe the use of saponins as foam enhancers in beverages.

Saponin derivatives, usually derived from yucca, quillaia, or sarsaparilla extracts are well known additives used to enhance foam in the soft drink industry. Some manufacturers add these compounds to root beer, birch beer or cream soda, for example. Yucca extract is used at a maximum level of 618 parts per million. Quillaia extracts are used at about 100 ppm. Studies that indicate potentially adverse biological activity for these saponins, such as their ability to lyse red blood cells have convinced some manufacturers to discontinue their use. (Lueng and Foster, Encyclopedia of Common Natural Ingredients, 1996, John Wiley and Sons, New York, pp. 432-434, 462-463 and 524-525).

### Cappuccino, Flavored Coffees, Creamed Teas and Hot Chocolate

Bisperink, Ufheil, Vuataz and Schoonman, Eur. Pat. Appl. (2001) EP 1074181 A1, teach the use of a soluble creamer powder containing carbohydrate, protein and entrapped gas to produce enhanced foam in beverages.

O'Connell, US Pat. Appl. Publ. (2004) US 2004105923 A1, teaches a foam stabilizing formulation containing octenyl succinic acid modified starch and at least one surfactant from the group consisting of acyl lactylate salts, proteins, protein hydrolyzates, sucrose esters and mixtures thereof.

Van Hekezen and Wiestra, Eur. Pat. Appl. (2003) EP 1329162 describe a dairy product suitable for mechanical frothing, that contains added hydrolyzed milk protein. The dairy product can be beaten by mechanical means or using a propellant gas to give a froth suitable for cappuccino and related beverages.

### Other Foam Products

Mott, Hettiarachchy, and Qi (J. Amer. Oil Chem. Soc. (1999), 76(11), 1383-1386) describe the effect of xanthan gum on whey protein and the use of the combination in foamed food products such as protein beverages, angel food cake and unique infant formulas. Demidova et al. (SU-A-1074475) describe a prophylactic dairy foodstuff containing 5-10% w/w fruit syrup, 5-15% w/w herb extract, 15-20% w/w dairy ice cream, and as balance a dairy base comprising buttermilk. The herb extract is preferably an aqueous extract of equal parts of mint, St. John's wort and dog rose which additionally contains 2-3% saccharose. The product is said to have a good stable foam structure, but this is not attributed to any particular constituent.

### BRIEF DESCRIPTION OF THE FIGURES

**Figure 1** describes the names of compounds that act as foam enhancers and their chemical structures.
**Figure 2** describes the structures of typical polyphenols in beer.
**Figure 3** describes the structural elements of catechols and diphenols for foam enhancement.

### BRIEF SUMMARY OF THE INVENTION

We have discovered that certain additives are effective and novel enhancers of foam in malt beverages, certain other beverages and other food-as described in this application. Low levels of camosic acid and /or carnosol or structurally related compounds enhance the formation, and stability of foams associated with malt beverages, certain carbonated beverages, and dairy products used to produce frothed coffees, teas or chocolate beverages.

Carnosic Acid, carnosol and related compounds are present in some *Labiatae* herbs and in various extracts of *Labiatae* herbs. *Labiatae* herbs containing camosic acid and/or carnosol include rosemary (*Rosmarinus officinalis*), sage (*Salvia officinalis*) and others. In many cases, *Labiatae* herb extracts, rather than the more difficult to obtain purified constituents can be employed to attain the desired foam enhancing effects. In other cases, it may be necessary to refine the crude extracts to both increase the concentration of the foam-enhancing constituents, and to remove those ingredients that are high in flavor or are incompatible in some way with the finished beverage product. Partially refined carnosol or camosic acid, containing between 25 to 70% active ingredient are useful forms adaptable to the present invention. Highly purified camosic acid and carnosol (>70% purity) can also be effectively employed in the present invention. Mixtures of carnosol, camosic acid and the other compounds, disclosed as foam-enhancing ingredients, below, are also effective in the present invention.

A number of structurally related compounds have been found to have significant foam enhancing potential. These compounds includes:
rosmariquinone, rosmanol, epi-rosmanol, isorosmanol, rosmaridiphenol, 12-methoxycamosic acid, and esters of camosic acid, such as methyl carnosate and ethyl carnosate. Rosmarinic acid, also found in a variety of *Labiatae* herbs is not a foam-enhancing agent.

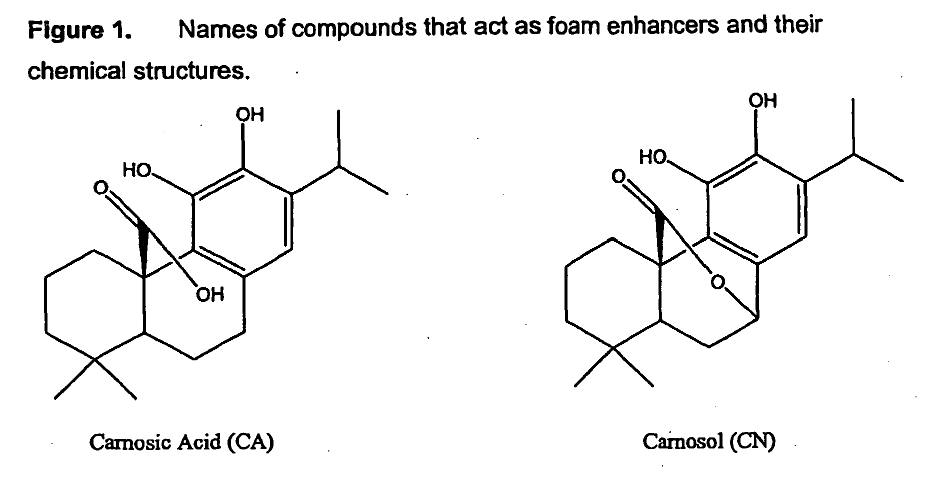

Because they are derived from a well-known culinary herb, carnosic acid, carnosol, and/or extracts of *Labiatae* herbs containing camosic acid, carnosol are the preferred form of this invention. Purified forms of camosic acid and/or carnosol are the most preferred forms of this invention, since they contain fewer impurities that might interfere with the use of the invention in practical applications.

We have found that these compounds can be used at concentrations as low as one ppm and give measurable foam enhancement in beverages. By foam enhancement we mean an improvement in the volume, duration (stability), appearance or mouthfeel of the foam. The upper limit of concentration in beverage and other food-related applications is dependent upon several factors. Solubility, flavor impact, cost and the potential to generate foams that are too pronounced, too stable, or unnatural in appearance are some of the important considerations. In general, depending upon the application, the higher the concentration, the greater the effect that is seen. For some applications, up to100 ppm of active foam-enhancer may be required. In beer, we find that effective enhancement of foam occurs with levels from as low as 2 to 10 ppm.

Occasionally, adding foam-enhancing ingredients of the present invention results in the formation of foams that are somewhat unnatural in appearance. In malt beverages, in particular, the foam can tend to mound up in the center of the glass. Also, as the foam collapses, the residual material left on the inside surface of the glass (cling) can sometimes have a grainy appearance. Often, these undesired effects can be corrected by adjusting the concentration of the foam-enhancing ingredients.

We have also discovered another way to control the appearance of the foams and the degree to which foam-enhancing effects are expressed. We have found that adding fatty acids to the foam-enhancing formulation, or directly to the beverage, or to a stage in the manufacture of the beverage, alters the properties and appearance of the foam. We have found that stearic acid, or other fatty acids, added to provide a final concentration in the beverage of 1-2 mg/L, makes carnosic acid enhanced foam appear more "natural" by altering the center mound and changing the appearance of the cling. The addition of fatty acids at the appropriate concentration does not affect the rate of foam collapse. Any medium to long chain fatty acid can be used and one skilled in the art will be able to optimize the selection of the fatty acid and its concentration to meet a particular need. It is important to keep in mind that certain fatty acids have flavor attributes that may render them unsuitable for a given application. Other fatty acids, particularly the unsaturated ones may give rise to flavor stability concerns, since they are readily oxidized. The most preferred fatty acids are the saturated acids containing from 10 to 24 carbon atoms.

What we therefore believe to be comprised by our invention may be summarized *inter alia* in the following words:

A method for improving the properties of a beverage foam wherein a foam-enhancing formulation comprising a *Labiatae* herb composition which comprises one or more naturally derived *Labiatae* herb substances selected from carnosic acid, carnosol, rosmariquinone, rosmanol, epi-rosmanol, isorosmanol, rosmaridiphenol, 12-methoxycarnosic acid and esters of carnosic acid is added either directly to a beverage or at a stage in its manufacture in a foam-enhancing amount which is below the flavor threshold.

Such a method, wherein the foam-enhancement comprises delayed foam collapse, delayed cover break, and/or heavy foam cling.

Such a method, wherein the foam enhancing formulation does not result in beverage hazing.

Such a method, wherein the beverage is selected from fermented malt beverages, beer, ale, dry beer, near beer, light beer, low alcohol beer, low calorie beer, porter, bock beer, stout, malt liquor, non-alcoholic malt beverages, beer in which the alcohol has been removed, cappuccino, flavored coffee, tea, hot chocolate and carbonated soft drinks.

Such a method, wherein the beverage is a malt beverage or beer.

Such a method, wherein the *Labiatae* herb composition is added at one or more stages of in its manufacture selected from:
- prior to the malting process,
- during the malting process,
- prior to the kilning process,
- during to the kilning process,
- prior to the mashing process,
- during the mashing process,
- prior to the lautering process,
- during the lautering process,
- prior to the wort boll process,
- during the wort boil process,
- prior to fermentation,
- during fermentation,
- prior to pasteurization,
- during pasteurization,
- prior to packaging and/or
- during packaging.

Such a method, wherein the *Labiatae* herb composition comprises carnosic acid, carnosol or a mixture thereof.

Such a method, wherein the concentration of said carnosic acid, carnosol or mixture thereof is between 0.5 and 100 ppm in the beverage.

Such a method, wherein the foam enhancing formulation further comprises a hop extract or derivative thereof and/or one or more hop oils or derivatives thereof.

Such a method, wherein the foam enhancing formulation further comprises one or more C₁₀₋₂₄ fatty acids.

Such a method, wherein the hop extract comprises isohumulones, dihydro-isohumulones, tetrahydro-isohumulones, hexahydro-isohumulones or mixtures thereof.

Such a method, wherein the *Labiatae* herb composition is formulated in a food grade carrier preferably comprising propylene glycol, ethanol, water, monoglycerides of fatty acids, diglycerides of fatty acids or glycerin, or mixtures thereof.

Such a method, wherein the *Labaitae* herb composition is in the concentration range of 0.25% to 50% by weight.

Such a method, wherein the *Labaitae* herb composition is in the concentration range of 0.5% to 20% by weight.

### DETAILED DESCRIPTION OF THE INVENTION

We have discovered a surprising foam enhancing and foam stabilizing effect of a number of compounds, including camosic acid, carnosol and a number of related derivatives. These compound, or formulations containing them, may be used to enhance the foam properties of beverages, such as beer, malt beverages, certain carbonated soft drinks, cappuccino, flavored coffees and teas, and hot chocolate.

### Improving foam in malt beverages and beer.

We have found that the addition of carnosol (CN), carnosic acid (CA) and certain other additives to various beers provides a large foam enhancement and stabilization effect. This effect has been quantified in controlled pours by measuring the time necessary for foam to collapse by two (2) inches, by measuring the cover break time (the time it takes for approximately 50% of the liquid beer to be visible through the top of the foam), by observing the amount and nature of the residue which clings to the sides of a glass after the foam collapse (cling), and instrumentally, by using the NIBEM method [J. Inst. Brewing, 2003, 109 (4), 400-402.]. These data are summarized in Table 1, with the exception of the NIBEM data, which is shown in Table 5.

The foam-enhancing preparations of the present invention can be added to finished beer or to the brewing process at a number of stages, such that the concentration of active foam-enhancing ingredients, such as camosic acid and/or carnosol in the final beer is sufficient to cause the foam enhancement. A very simplified scheme of the brewing process is outlined below.

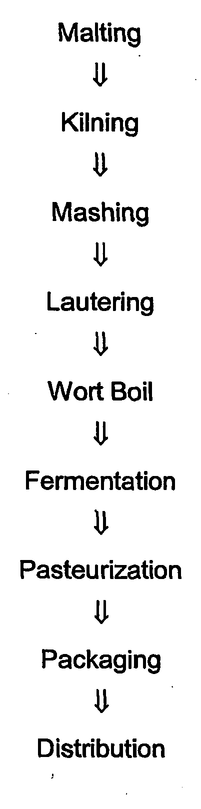

We have found that the foam enhancing preparations of this invention can be added at any point in the brewing process outlined above. The inventive compositions can be added prior to or during the malting process. The inventive compositions can be added prior to or during the kilning process. The inventive compositions can be added prior to or during the mashing process. The inventive compositions can be added prior to or during the lautering process. The inventive compositions can be added prior to or during the wort boil process. The inventive compositions can be added prior to or during fermentation. The inventive compositions can be added prior to or during pasteurization. The inventive compositions can be added prior to or during packaging.

We have also found that the active ingredients can be consumed during various stages in the brewing process and that enough camosic acid and / or carnosol and / or related compounds must be added to provide an effective foam-enhancing amount in the finished product. The appropriate levels of dosing may be determined through routine experimentation and on a case-by-case basis. Of course, the foam-enhancing preparations of the present invention can be added at multiple points during the brewing process, during mashing and prior to pasteurization, for example, or any combination of the processing steps.

The concentration of carnosic acid and/or carnosol and/or related compounds sufficient to cause a foam enhancing effect will depend upon the nature of the beer, the amount of protein, the content of isohumulones, the levels of melanoidins, the degree of carbonation, and other factors, but is generally in the range of 1 to 100 ppm. A more preferred range is from 2 to 20 ppm and the most preferred range is from 2.5 to 10 ppm, by weight. Since it depends upon so many variables, the most appropriate and effective level of foam enhancing ingredient will have to be determined experimentally for each beer and for each method of addition.

Carnosic acid is readily added to finished beer in the form of a solution in a food-grade carrier, such as ethanol, propylene glycol, benzyl alcohol, or glycerin. The concentration of these solutions can vary according to the needs of the user. Typical concentrations of from 0.25 to 30% are easily employed. Carnosic acid can be added in water, as sodium or potassium camosate. The alkali metal salts can be prepared, isolated and added directly to beer. Camosic acid can be made soluble in water by carefully adjusting the pH with sodium hydroxide, sodium bicarbonate, sodium carbonate, potassium hydroxide, potassium carbonate, potassium bicarbonate, or other acceptable basic compound. Care must be taken to avoid too high a pH or decomposition, discoloration or oxidation of the carnosic acid may result. Water/ethyl alcohol mixtures are also effective carriers for camosic acid. Solutions of camosic acid in ethanol, propylene glycol or glycerin and solutions of alkali metal salts of camosic acid in water or water alcohol mixtures are best prepared using a method which removes oxygen from the solvent. This can be done by sonication, evacuation, purging with an inert gas or other techniques known in the art.

Camosic acid can be added in the form of a *Labiatae* herb extract. These extracts often contain other related derivatives such as carnosol, rosmariquinone, rosmanol, epi-rosmanol, isorosmanol, rosmaridiphenol, 12-methoxycarnosic acid, and esters of camosic acid, such as methyl carnosate and ethyl camosate, as well as oils, phospholipids, waxes, triterpenoids like ursolic acid, betulinic acid and oleanolic acid. It is better to add this less pure form of carnosic acid to an earlier step in the brewing process. If cruder forms of Labiatae herb extracts are added to finished beer, they can cause unwanted cloudiness precipitates or flavor changes. In general, it is better to add the less purified forms of this invention to the early stages of the brewing process and the more purified forms of this invention to the later stages in the brewing process.

Carnosol can be added in similar fashion and identical concentration ranges as carnosic acid. If added early in the brewing process, the full concentration may not carry through the brewing process, and either enough carnosol must be added to insure that sufficient quantities carry into the finished product, or additional carnosol must be added later in the process to provide an effective concentration in the finished malt beverage. This optimization may be determined through routine experimentation on a case by case basis. Carnosol is less soluble than camosic acid in the carriers described above. Carnosol does not contain a carboxylic acid group, and therefore does not form alkali metal carboxylate salts. In strong base, it forms phenoxylate salts that are easily oxidized. When added as a constituent in a *Labiatae* herb extract, the same considerations regarding point of addition in the brewing process that were described for camosic acid-containing extracts apply. In pure form, carnosol has at least one advantage over carnosic acid. It is more stable and is therefore more easily stored.

A particularly convenient method for adding camosic acid, carnosol or related compounds from *Labiatae* herb extracts (rosmariquinone, rosmanol, epi-rosmanol, isorosmanol, rosmaridiphenol, 12-methoxycarnosic acid, and esters of carnosic acid, such as methyl carnosate and ethyl camosate) to beer or malt beverages is in the form of mixtures with hop bitter acids. Solutions of Labiatae herb phenolic compounds or synthetic compounds, singly or in admixture, can be combined with isohumulones, dihydro-isohumulones, tetrahydro-isohumulones, hexahydro-isohumulones, or mixtures thereof, in water, propylene glycol, ethanol, or mixtures thereof.

The foam enhancing formulations may be added by a variety of techniques known to those who practice the art of brewing. They may be added through use of metering systems, spraying systems and injection systems as commonly used in the art. They may also be added directly as a bulk ingredient. The formulations may be added to water used at various steps in the process, such as in grain steeping, wet milling, malt conditioning, mashing, lautering, and the like.

### Foam Collapse in Beer and Malt Beverages

Foam collapse is measured by two different techniques. The first involves measuring the time it takes for the foam to collapse 2 inches from the top of the glass under a controlled pouring test. This data is shown in Table 1, where one can see that the collapse time increases by 20% - 95% with the addition of 5 ppm of either carnosol or camosic acid depending on the beer. Pure CA appears to have a slightly better effect than pure CN in Commercial Pilsner Beer and equivalent performance in Light Beer when both are evaluated at 5 ppm concentration. Higher concentrations of CA provide an even larger effect (stable 1). Lastly, better enhancement of foam quality and stability is observed in lighter beers vs. heavier beers. The second technique for measuring foam stability involves the use of the so-called NIBEM test. It is an industry standard test as described in J. Inst. Brewing, 2003, 109 (4), 400-402. The results from this test are shown in Table 5.

From a comparison of the examples using pure CA and certain extracts containing CA, one can see that the extracts can sometimes be more effective and provide a longer time before foam collapse. A formulation containing benzyl alcohol extract was found to be particularly effective.

### Cover Break Time in Beer and Malt Beverages

Cover break time is the time it takes for approximately 50% of the liquid beer to be visible through the top of the foam. Dramatic results are observed in comparing the results of cover break time. Here increases of 98% -140% are observed for pure CA in Commercial Pilsner Beer and Light Beer, while 14% - 25% increases are observed in Clear Bottle Import and Clear Bottle Beer.

CA extract in benzyl alcohol gave a greater improvement relative to pure CA in Light Beer.

CN improved the cover break time in Light Beer by about 149%, and 15% in Commercial Pilsner Beer.

### Cling, Lacing and Mounding Results in Beer and Malt Beverages

CA, when added to Commercial Pilsner Beer, Clear Bottle Import, Clear Bottle Beer, Light Lager Beer, and Light Beer gave much heavier cling than the control, regardless of the source. The same is true for CN as shown for Light Lager Beer, Light Beer and Commercial Pilsner Beer).

### Haze Formation Results

In beer and in malt beverages, it is important that additives do not contribute to precipitation phenomena that lead to haze formation. Haze, in most malt beverages is considered a detrimental property.

Bamforth has commented that it is surprising that there are not more reports on the influence of polyphenols on beer foam since their oxidation products were known to cross-link with proteins to form haze, and presumably would be capable of cross-linking with proteins to form foam. It should be stipulated at this point that the polyphenols that Bamforth is referring to have very different structures from those covered by this invention (See Figure 2) [Hop Chemistry:Homebrew Science", Steve Parkes, Internet Reference: http://www.byo.com/departments/884.html; Hayes, P.J., Smyth, M.R., McMurrough, I. Analyst, September 1987, Vol 112, 1197-1204.; McMurrough, I., Madigan, D., Kelly, R.J, Smyth, M.R.. J.Am.Soc.Brew.Chem., 1996, 54(3), 141-148]. Hayes, Smyth and McMurrough report that polyphenolic flavonols found in beer are classified into 3 categories: simple flavonols such as (+)catechin and (-) epicatechin; polymeric flavonols, which result from the oxidative polymerization of the simple flavonols; and the complexed flavonols, which are formed on complexation with proteins. The presence of oxidized flavonols in beer is well known. Two examples of oxidized flavonols found in beer are procyanidin B3 and prodelphinidin B3, which are dimeric structures of catechin and gallocatechin. Their structures along with a representative tannin, a polymerized, form of oxidized flavanols are shown in Figure 2.

The issue here is that when this cross-linking occurs, the protein complex precipitates out of solution producing the haze. The effect of camosic acid , carnosol and other Labiatae herb compounds (rosmariquinone, rosmanol, epi-rosmanol, isorosmanol, rosmaridiphenol, 12-methoxycarnosic acid, and esters of camosic acid, such as methyl carnosate and ethyl camosate) is to not precipitate any materials, but, surprisingly, to interact with the foam-forming constituents to keep the foam stable and to prevent it from collapsing over a longer period of time. Surprisingly, the addition of carnosic acid or carnosol not only fail to form haze immediately after addition, they also do fail to contribute to haze formation after a period of aging. Referring to Table 2, it can be concluded that the addition of 20 ppm carnosic acid or 20 ppm rosmarinic acid or 10 ppm each of rosmarinic acid and carnosic acid to beer, had no negative effect on haze formation, even after aging at 40C for 14 days. The same experiment run in the presence of air revealed that rosmarinic acid had very little effect on haze formation, but that camosic acid actually gave an improvement. This behavior highlights the chemical difference between Bamforth's polyphenols and the compounds of the present invention.

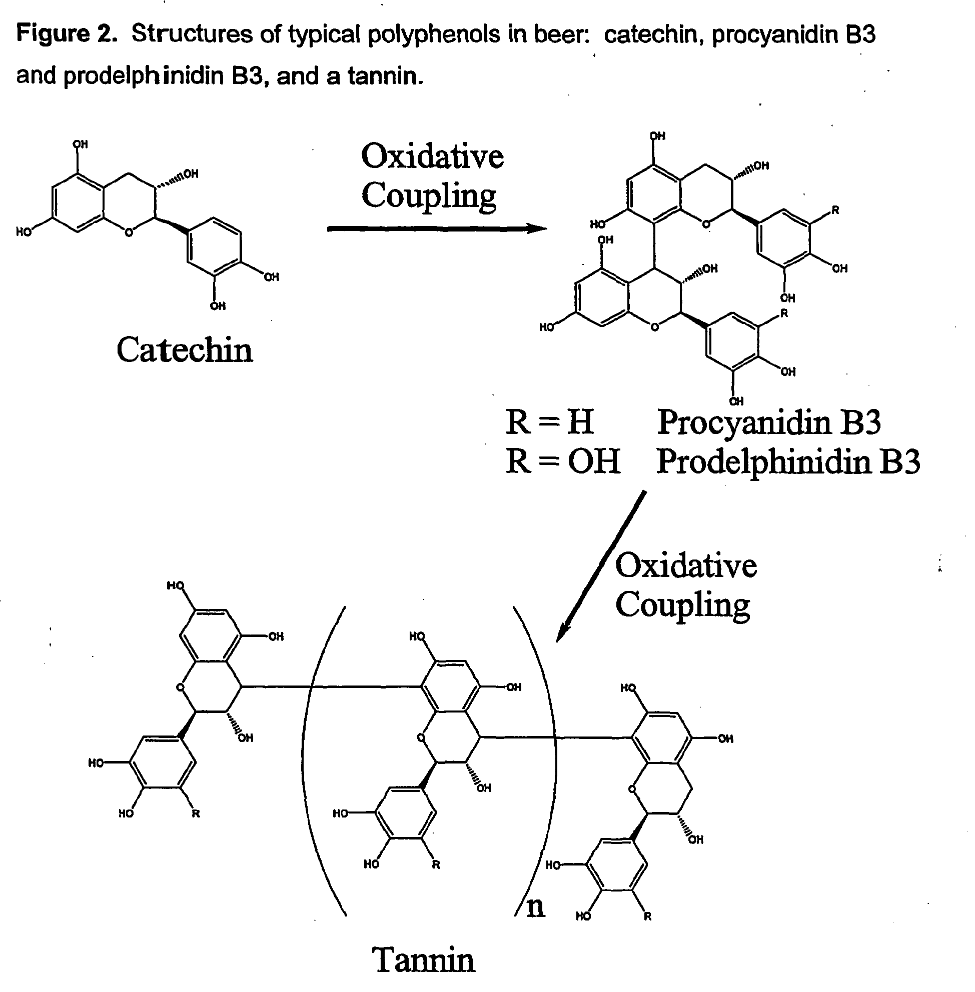

### Structure/Function Relationship to Foam Enhancement in Beer and Malt Beverages

It appears from Table 3 that for the series (A, B, C, D, E, F), the more hindered and lipophilic the phenolic groups, the more effective the compound is as a foam enhancer and stabilizer. It is not clear why F does not provide foam enhancement, while D does. Furthermore, we cannot easily explain why G (a hydrobromide salt) works. Its structure is reminiscent of rosmarinic acid, which we have determined is not a foam enhancer. Compound G has fewer lipophilic groups next to the phenolic OH's than do camosic acid, carnosol, A or D. Furthermore, with regard to the lack of lipophilic groups, G is more similar to structures H, I or J and E that do not show foam-enhancing effects. With regard to the ortho-substituted dihydroxyphenol structures, it appears that the more hindered and/or lipophilic structures appear to have better foam enhancement capabilities. For diphenolic structures such as A, it appears that more hindered and/or lipophilic structures are better foam stabilizers and enhancers. For structures such as G, it is not clear what structural features are responsible for the effect.

As further examples showing the difficulty in predicting structures with foam stabilizing properties, 3,5-dimethylresorcinol (L) is similar in structure to the hindered catechols and hydroquinones, but is not a foam enhancer. The same is true for 4-tert-butylcatechol (M). The two coumarins K and N also have resorcinol and catechol structures, respectively, but neither is very hindered and neither are foam enhancers.

What is clear from the above discussion is that predicting whether or not a structure is going to be a foam enhancer is very difficult. Molecules with very similar structural features have very different efficacies as foam enhancers and stabilizers. A very lipophilic diphenol such as F is not a foam enhancer, while A and D are foam enhancers. The fortuitous discovery that carnosic acid, carnosol, rosmariquinone, rosmanol, epi-rosmanol, isorosmanol, rosmaridiphenol, 12-methoxycarnosic acid, esters of carnosic acid, such as methyl carnosate and ethyl carnosate, and compounds A, D and G are foam enhancers was quite unexpected and not predictable, as evidenced from the examples.

Some of the structural elements that appear to be important based on this work are as follows. R1 and R4 in the general catechol structure shown in Figure 3 should be bulky groups and preferably lipophilic such as branched alkyl and/or aryl groups, as is the case in carnosol and camosic acid. R2 and R3 of the catechol structure in Figure 3 should also be lipophilic.

R1, R2, R3 and R4 in Figure 3 for the general hindered diphenol should also be lipophilic, bulky, branched alkyl or aryl groups. R5 would also preferably have the same requirements as R1, R2, R3 and R4.

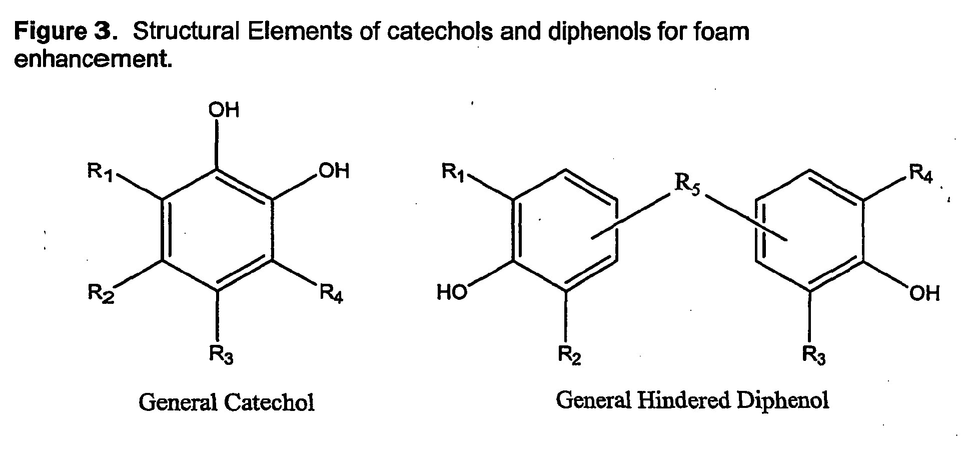

**Table 1. Foam Enhancement as a Function of Structural Elements.**

| Letter | Chemical Structure | Name |
|---|---|---|
| A | 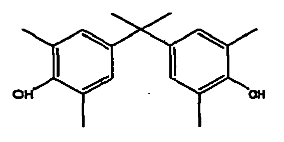 | 2,2',6,6'-tetramethylbisphenol-A |
| B | 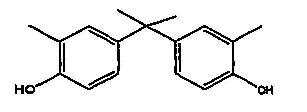 | 2,2'-dimethylbisphenol-A |
| C | 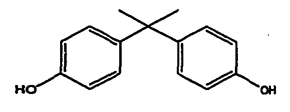 | Bisphenol-A |
| D | 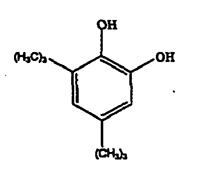 | 3,5-di-*tert*-butylcatechol |
| E | 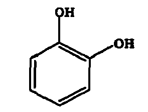 | Catechol |
| F | 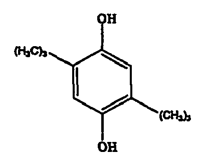 | 2,5-di-*tert*-butylhydroquinone |
| G | 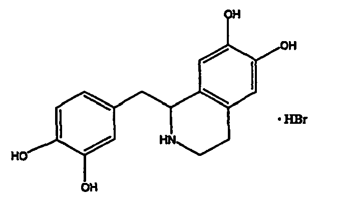 | Tetrahydropapaveroline hydrobromide |
| H | 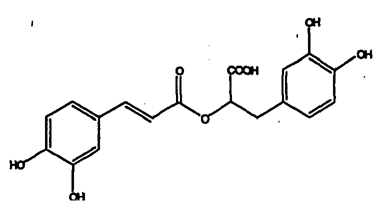 | Rosmarinic Acid (RA) |
| I | 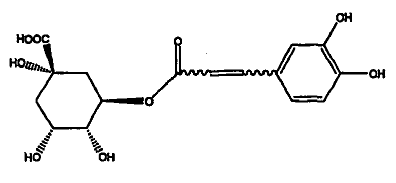 | Chlorogenic Acid |
| J | 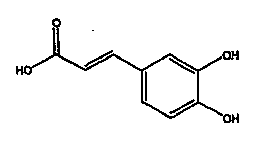 | Caffeic Acid |
| K | 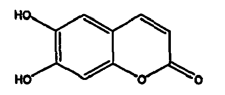 | 6,7-Dihydroxycoumarin (Esculetin) |
| L | 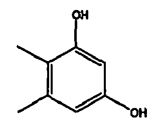 | 2,5-Dimethylresorcinol |
| M | 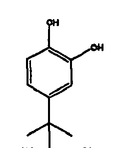 | 4-tert-butylcatechol |
| N | 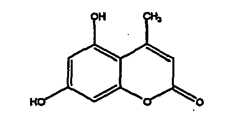 | 5,7-Dihydroxy-4-methylcoumarin |
| O | 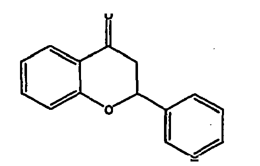 | Flavone |
| P | 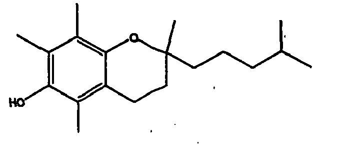 | d,l-α-tocopherol |
| Q | 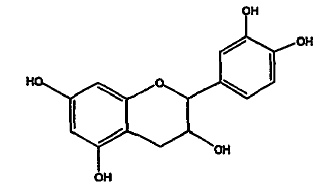 | Catechin |

### EXPERIMENTAL PART

The present invention will be better understood in connection with the following examples, which are intended as an illustration of and not a limitation upon the scope of the invention.

### Example 1- Beer foam enhancement using carnosic acid, carnosol, and other additives.

A 1% solution of pure, crystalline (HPLC 99.9%) Camosic Acid was prepared by dissolving 100 mg CA in a total volume of 10 mL Ethanol. Commercial Pilsner Beer, which at the time was two months old, was dosed at 5 ppm Camosic acid by adding 178 µL to each of two 355 mL (12 oz) bottles and using the following bottle addition procedure:

Bottle additions were done as follows:
1. A bottle of the beer was opened, struck sharply on the top to induce foaming (called "fobbing"), and crowned. The fobbing excludes air. The bottle was swirled and inverted. This sample was designated "No Additions."
2. Bottles of beer were opened and an aliquot of the carnosic acid solution was added in an amount to give the desired overall concentration in the beer. The bottle was then fobbed, as above and crowned. It was then swirled and inverted. The sample was designated appropriately to reflect the additive and concentration.
3. The bottles are chilled to 0-2°F for a minimum of 4 hours.

Additional bottles were dosed at 10 ppm by adding 355 µL per bottle. Two bottles were opened, fobbed and crowned without additions as controls.

Using a standardized method of pouring beer into a glass and starting the timing when the foam first overflows the glass, we measured the time for the foam to collapse two inches from the top of the glass, in the center of the glass. We also noted the density and amount of the foam clinging to the sides of the glass as the beer collapsed ("cling" or "lacing), and the cover on top of the beer after the foam had receded past the 2 inch mark. Pours were made with a specially designed apparatus, which pours four bottles at same time from exactly the same height and every pour includes a control to eliminate uncontrollable noise factors. The results show a marked improvement in both the collapse time and the cling.

After the success of the first trial, the experiment was repeated using carnosic acid and carnosol from a variety of sources. We used both pure compounds and extracts containing them to prepare the solution additions. We also tried a variety of beers. All were dosed by our standard method.

**Table 2. Foam Enhancement vs. Beer Type and Concentration of Carnosic Acid (CA) and Carnosol (CN). Sources are from rosemary unless otherwise noted.**

| Foam Enhancement^{d} | | | | | |
|---|---|---|---|---|---|
| Beer | Additive | Conc | Average % increase in Collapse Time^{a} | Average % Increase in Cover Break Time^{b} | Cling Description^{c} (sides of glass) |
| | | | | | |
| Com. Pilsner Beer | None | N/A | N/A | N/A | Slight to Moderate |
| | CA Pure | 5 ppm | 31.3% | >140% | Heavy, Patterned |
| | CA Pure | 10 ppm | 44.6% | >140% | Extremely dense lacing |
| | | | | | |
| Light Beer | None | N/A | N/A | N/A | Sparse lace |
| | CA Pure | 5 ppm | 60.3% | >98% | Very heavy lacing |
| | CA Pure | 10 ppm | 82.3% | >98% | Very heavy lacing |
| | | | | | |
| Clear Bottle Import | None | N/A | N/A | N/A | Slight to Moderate |
| | CA Pure | 5 ppm | 23.3% | 25% | V. heavy, complete coverage |
| | | | | | |
| Clear Bottle Beer | None | N/A | N/A | N/A | Good lacing, cling |
| | CA Pure | 5 ppm | 50.0% | 14% | Extremely Heavy |
| | | | | | |
| Light Beer | None | N/A | N/A | N/A | V. Sparse lacing |
| | CN Pure | 5 ppm | 48.1% | 149% | V. Good cover in lacing |
| | | | | | |
| Com. Pilsner Beer | None | N/A | N/A | N/A | Good Lacing |
| | CN Pure | 5 ppm | 19.7% | 15.4% | V. Good lacing |
| | | | | | |
| Light Lager Beer | None | N/A | N/A | N/A | Sparse lacing |
| | CA (purchased) | 5 ppm | 57.1% | Test stopped prior to completion | Thick lacing - still had cover when stopped |
| | | | | | |
| Light Beer | None | N/A | N/A | N/A | V. sparse lacing |
| | CA (Benzyl Alcohol Formulation) | 5 ppm | 78.9% | >22.4% | V. dense lacing |
| | | | | | |
| Light Lager Beer | None | N/A | N/A | N/A | SI. to moderate lacing |
| | CA (Benzyl Alcohol Formulation) | 5 ppm | 94.9% | >3.4% | V. Heavy lacing |
| | | | | | |
| Light Lager Beer | None | N/A | N/A | N/A | Thin, sparse lacing |
| | CN from Sage | 5 ppm | 53.9% | >0% | Heavy, patterned lacing |
| | | | | | |
| Light Beer | None | N/A | N/A | N/A | Thin lacing, sparse coverage |
| | 4,4'-Isopropylidene bis-(2,6-dimethylphenol) (A) | 5 ppm | 21.6% | >30.4% | fairly complete lacing |
| | 3,5-Ditertbutylcatechol (D) | 5 ppm | 22.7% | >30.4% | 3/4 complete lacing |
| | Tetrahydropapavero line (G) | 5 ppm | 15.9% | 1.1% | sparse lacing |
| | None | N/A | N/A | N/A | Thin lacing, sparse coverage |
| | d,1-Alpha tocopherol (P) | 5 ppm | -31.8% | -46.7% | no lacing at all |
| | None | N/A | N/A | N/A | Sparse lacing |
| | 5,7-Dihydroxycoumarin (Esculetin) (K) | 5 ppm | 0.0% | 0.0% | Sparse lacing |
| | Flavone (O) | 5 ppm | 0.0% | 0.0% | Sparse lacing |
| | 5,7-Dihydroxy-4-methylcoumarin (N) | 5 ppm | 2.0% | 0.0% | Sparse lacing |
| | None | N/A | N/A | N/A | Sparse lacing |
| | 2,5-Dimethylresorcinol (L) | 5 ppm | -6.3% | -20.0% | Sparse lacing |
| | 4-tert-butylcatechol (M) | 5 ppm | 2.1 % | -20.0% | Sparse lacing |
| | None | N/A | N/A | N/A | Sparse lacing |
| | Catechin (Q) | 5 ppm | 0.0% | 0.0% | Sparse lacing |

| | | | | | |
|---|---|---|---|---|---|
| a) Foam collapse is the time it takes for the foam to collapse 2 inches from the top of the glass. b) Cover break time is the time it takes for approximately 50% of the liquid beer to be visible through the top of the foam. c) Cling or Lacing is the foam that adheres to the ,sides to the glass after the foam collapses. d) All percentages are the results of averages of two or three measurements | | | | | |

### Example 2 - Effect of Carnosic Acid and Rosmarinic Acid on Haze in the Highly Hopped Beer.

Solutions of rosmarinic acid and carnosic acid (2% w/v) were prepared separately by dissolving the purified additive (500 mg) in 25 mL of 100% ethanol. The bottle dosing methods used were the same as those described in Example 1. The following samples were made:
1. 20 ppm camosic acid
2. 20 ppm camosic acid plus Air
3. 20 ppm rosmarinic acid
4. 20 ppm rosmarinic acid plus Air
5. 10 ppm camosic acid + 10 ppm rosmarinic acid
6. 10 ppm camosic acid + 10 ppm rosmarinic acid + Air
7. No Additions plus Air
8. No Additions.

Treatments 1 through 8 were stored in a temperature regulated room set at 40° C and maintained at 1 ° C. At intervals of Zero time, 3 days, 7 days, and 14 days, samples were withdrawn and Haze was measured on a Haze Meter, Type UKM1d, Radiometer, Copenhagen, which reported Haze numbers in ASBC Formazin Units. A clean, dry, clear flint bottle with a permanent mark for alignment was used for each measurement. The instrument was zeroed with distilled water, prior to measuring the beer sample.

The results of this study are summarized in Tables 3 and 4 below.

**Table 3. Beer Haze Without Added Air**

| **Beer + Treatment** | **Days** | **Haze** |
|---|---|---|
| Highly Hopped Aromatic Beer No Addns | 0 | 37 |
| | 3 | 29 |
| | 7 | 40 |
| | 14 | 45 |
| Highly Hopped Aromatic Beer + 20 ppm CA | 0 | 40 |
| | 3 | 30 |
| | 7 | 35 |
| | 14 | 45 |
| Highly Hopped Aromatic Beer + 20 ppm RA | 0 | 37 |
| | 3 | 40 |
| | 7 | 35 |
| | 14 | 40 |
| Highly Hopped Aromatic Beer + 10 ppm CA + | 0 | 37 |
| 10 ppm RA | 3 | 32 |
| | 7 | 40 |
| | 14 | 40 |

**Table 4. Beer Haze With Added Air**

| **Beer + Treatment** | **Days** | **Haze** |
|---|---|---|
| Highly Hopped Aromatic Beer + Air, no other | 0 | 40 |
| Additions | 3 | — |
| | 7 | 90 |
| | 14 | 120 |
| Highly Hopped Aromatic Beer + 20 ppm CA + Air | 0 | 40 |
| | 3 | 45 |
| | 7 | 50 |
| | 14 | 80 |
| Highly Hopped Aromatic Beer + 20 ppm RA + Air | 0 | 37 |
| | 3 | 32 |
| | 7 | 40 |
| | 14 | 100 |
| Highly Hopped Aromatic Beer + 10 ppm CA + | 0 | 37 |
| 10 ppm RA + Air | 3 | 44 |
| | 7 | 50 |
| | 14 | 50 |

### Example 3 -Measurement of foam improvement in bottle-dosed beers treated with 4 parts per million of carnosic acid using the NIBEM method.

Using beer purchased at a local store, four bottles each of three different brands of bottled beer were cooled to 2 to 3 °C before any treatments took place. Two bottles of each brand were used to prepare controls. They were opened, fobbed to exclude air and crowned when the foam reached over the finish. Two bottles were used to prepare treated samples. They were opened, treated with 142 µL of a 1% carnosic acid solution made up in ethanol, giving a final carnosic acid concentration in the beer of 4 ppm. Like the controls, the treatment samples were fobbed and crowned. Both the treatment samples and the controls were pasteurized at 60°C for 10 minutes, then cooled and stored at 2 to 3 °C until submitted for NIBEM analysis. Each control and treated sample was analyzed using the standard method outlined in the manual for the NIBEM-T Foam Stability Tester manufactured by Haffman's. The results are shown in Table 5.

**Table 5. NIBEM-T Foam Stability Measurements**

| | | **Time to collapse these distances (s)** | | | | | |
|---|---|---|---|---|---|---|---|
| **Sample** | ***Treatment*** | ***10 mm*** | ***20 mm*** | ***30 mm*** | **% *Improved 10*** | **% *Improved 20*** | **% *Improved 30*** |
| | | | | | | | |
| Domestic Lager | *Control* | 73 | 151 | 229 | 31 | 29 | 23 |
| | *Control* | 74 | 150 | 229 | | | |
| Domestic Lager | + *4 ppm* CA | 96 | 196 | 283 | | | |
| | *+ 4 ppm CA* | 96 | 192 | 280 | | | |
| Imported Lager | *Control* | 89 | 178 | 261 | 25 | 22 | 19 |
| | *Control* | 89 | 178 | 263 | | | |
| Imported Lager | *+ 4 ppm CA* | 112 | 219 | 315 | | | |
| | *+4 ppm CA* | 111 | 216 | 310 | | | |
| Domestic Lite Lager | *Control* | 102 | 207 | 300 | 32 | 24 | 20 |
| | *Control* | 108 | 200 | 292 | | | |
| Domestic Lite Lager | + *4 ppm CA* | 136 | 250 | 351 | | | |
| | *+ 4 ppm CA* | 142 | 255 | 358 | | | |

The NIBEM-T foam Stability Tester measures rates of foam collapse for 10, 20 and 30 millimeter distances in a protected, temperature-monitored environment. It is a method accepted by the European Brewing Congress [J. Inst. Brewing, 2003, 109 (4), 400-402.] This test shows that foam stability in the three, treated beers is improved by roughly 19-32% as measured by NIBEM collapse times.

### Example 4 -Measurement of foam improvement in beer treated with carnosic acid in the brewing process.

Beer was brewed in a commercial pilot brewery as described below.

### Mash In

3.85 Kg of Breiss 2 row pale malt was wetted with 50-60 ml of water spray and ground through two roller mill rollers set at 0.025 inch. The ground grain was added to 16 liters of filtered brew water at 130 °F. The pH adjusted to 5.1 to 5.4 with 75% phosphoric acid.

### Mash Program

The mixed water/grain or "mash" was held at 122 °F for 10 minutes with agitation. The first foam-enhancement composition was added at mash in. The foam-enhancement composition additions, including control, are summarized in Table 6. After a 10 min hold, the mash was ramped to 145 °F in 11 minutes at 2 degrees per minute. The mash was held at 145 °F for 45 minutes. The mash was ramped to 155 of in 5 minutes at 2 degrees per minute. The mash was held at 155 °F for 30 minutes with agitation. After a 30 min hold, the mixture temperature was raised to 170 °F in 7 minutes at 2 degrees per minute and held at 170 °F for 10 minutes.

**Table 6. A summary of treatment additions.**

| Treatment | Addition at Mash In | Target ppm added at Mash In | Addition at Sparge Water | Target ppm added at Sparge Water | Addition at Kettle Boll Start | Target ppm added at Kettle Boil Start |
|---|---|---|---|---|---|---|
| Control | 100 ml Ethanol | | 100 ml Ethanol | | 100 ml Ethanol | |
| RA/CA | 2.22 g rosmarinic acid in 100 ml Ethanol | 100 ppm | 0.55 g rosmarinic acid in 100 ml Ethanol | 25 ppm | 0.37 g carnosic acid in 100 ml Ethanol | 10 ppm |
| CA/RA | 2.0 g carnosic acid In 100 ml Ethanol | 100 ppm | 2.0 g carnosic acid in 100 ml Ethanol | 100 ppm | 0.82 g rosmarinic acid in 100 ml Ethanol | 20 ppm |

### Wort Straining

The mash was then dropped to Lauter Tun and allowed to settle for 30 minutes undisturbed. Once the grain was transferred, the Lauter was "Vorlauffed" (wort was drawn from the bottom and recirculated to the top in spray form) for 30 minutes or until runnings were clear. Once clear, the liquid was pumped into the bottom of the brew kettle at 150 °F. Meanwhile, 20 Liters of sparge water was preheated to 170 °F and adjusted to pH 5.1 to 5.4 with 75% phosphoric acid. This "sparge water" was sprayed over the top of the grain bed just before the grain showed through the surface of the first wort. *The second foam enhancing composition was added to the sparge water prior to spraying.* All additions are summarized in Table 7. The last runnings were terminated at 3 °Brix measured by refractive index. Spent grain was sampled for assay and disposed of.

### Kettle Boil

Approximately 11-12 liters of filtered brewing water was added to the brew kettle, making gravity 5.5 to 6.5 °Brix. The brew kettle was set to a rolling boil with lid off for 90 minutes. At beginning of boil 0.2g of a hop derived non-acidic resin code and 2.6g of isohumulones were added. The third foam-enhancing composition was added to the brew kettle at the beginning of kettle boil. All additions are summarized in Table 7. Twenty minutes before the end of the kettle boil, 1.6 Kg of liquid brewer's syrup 60/44 IX was added to the boiling wort. The kettle was allowed to cool undisturbed to about 180 °F for one hour. The Brix of the wort was taken at this point and was in an acceptable range of 10.8 to 11.2.

### Wort Cooling

Using a MasterFlex peristaltic pump the wort was pumped through a heat exchanger and cooled to 45-50 °F while being aerated with bottled medical grade air, filtered through a Gelman 0.2 um filter. The wort was drawn off above the bottom of the kettle to avoid taking hot trub.

### Fermentation and Maturation

Wyeast yeast strain 2007 (300 mL) was added to the aerated wort in a fermenter. Primary fermentation temperature was 50 °Brix. During fermentation the beer was sampled daily for pH and gravity readings. The fermenting wort was held in a water bath at 50 °F for 5-7 days or until the gravity dropped to 3.3-3.6 °Brix. The fermenter was then moved to a 60 °Brix water bath for diacetyl rest for three days. The beer was then transferred to a sanitized tank that had been filled with sterile water. Prior to transfer, the tanks were blown out with CO₂ to insure that there was no oxygen left in the keg. The keg was stored at 45 °F for 7 days for maturation. The keg was then transferred to cold storage for 10 days of aging at 32 °F.

### Finishing

After cold storage, the beer was filtered using a Cuno filter housing and a Cuno 70-H four disc filter into a sanitized tank that had been filled with sterile water and blown out with CO₂. This "bright beer" was carbonated at 12 psi for 25 minutes and stored at 38 °F with a CO₂ head space.

The results of this experiment are shown in Table 7. The NIBEM method was run as outlined in Example 3. When carnosic acid was added at mash in and in the sparge water, a positive effect on foam enhancement was noted in the finished beer. Surprisingly, another beneficial effect was seen. When the beer was force-aged (heated to 32 degrees C for 7 days), the control beer showed a dramatic drop in foam and foam stability. One of the aged beers (CA/RA) that had been treated with the foam-enhancing composition retained its improved foam and improved foam stability to a much greater extent. This example shows that it is important to optimize the timing and amounts of the foam-enhancing composition added in the brewing process. Apparently, not enough effective foam-enhancing composition survived into the finished beer in the RA/CA case, where the carnosic acid was added at a relatively lower amount at the start of Kettle Boil.

**Table 7. Effect of foam-enhancing treatments added during the brewing process also showing the preserving effect of the treatment on the foam of aged or heat-treated beer. NIBEM results are in seconds.**

| | Control Beer | Aged Control | RA/CA treatment | RA/CA treatment aged | CA/RA treatment | CA/RA treatment aged |
|---|---|---|---|---|---|---|
| Average seconds to 10 mm drop | 67 | 46 | 61 | 48 | 73 | 71 |
| Average seconds to 20 mm drop | 133 | 97 | 124 | 107 | 148 | 147 |
| Average seconds to 30 mm drop | 207 | 155 | 195 | 142 | 224 | 225 |

### Example 5 - Controlling foam appearance using fatty acids.

A 1 % solution of carnosic acid was prepared by dissolving 250 mg of camosic acid in exactly 25 mL of ethanol. A 1 % solution of pure stearic acid was also prepared. In a few of the experiments of this example, a 1% solution of dihydro-isohumulone (Rho) was also added to provide additional hop bittering (see Table 8). All treated samples were prepared by opening the bottles, dosing in the foam-enhancing or bitter formulation, fobbing to remove air, and crowning. The control samples were opened, fobbed and crowned. The beer used in all experiments was a commercial, light American lager. Foam pours were made with a beer temperature around 10°C with a device that insured that all the beers were poured in an identical manner. Controls and treatment samples were randomly placed on the pouring device.

**Table 8. Foam results for beer dosed with camosic acid and stearic acid.**

| **Sample** | **2 inch collapse time** **(seconds)** | **Foam Cover Description** |
|---|---|---|
| Control | 270 | Normal for this light lager |
| + 2 ppm camosic acid | 330 | High center mound; heavy, grainy cling |
| + 2 ppm camosic acid + 2 ppm Rho | 350 | High center mound; heavy, grainy cling |
| + 2ppm carnosic acid + 2 ppm Rho +2ppm Stearic Acid | 350 | Reduced mounding; cover and cling - more like control |
| Control | 250 | Normal |
| + 2.5 ppm Rho + 2.5 ppm camosic acid + 2.5 ppm Stearic Acid | 370 | Like control |
| + 2.5 ppm Rho + 2.5 ppm camosic acid | 370 | High center mound; heavy, grainy cling |
| + 2 ppm camosic acid | 330 | High center mound; heavy, grainy cling |
| + 2 ppm Stearic Acid | 250 | No cling |
| + 4 ppm Rho + 2 ppm camosic acid + 1 ppm Stearic Acid | 330 | Natural looking foam Slight haze due to high rho concentration |

### Example 6 - Use of carnosic acid to enhance the foam of root beer soft drinks.

Four different commercial root beers were purchased from a local supermarket. For each root beer brand, a treatment and a control sample were prepared. The control samples, each consisting of 355 mL, were opened, fobbed and re-crowned. The treatment samples, also consisting of 355 mL of root beer, were prepared by opening the bottles, adding 355 µL of a solution of camosic acid (250 mg of pure compound in 25 mL of ethanol), fobbing and re-crowning. Each control and treatment bottle was inverted after crowning, and placed in the refrigerator at 35 °F for one hour prior to evaluation. Foam pours were done mechanically with a pouring machine to assure timing and other factors were the same for all trials. Controls were poured along side of the treated samples. The root beers were poured into conical liter beakers graduated at 50 mL increments. Foam volume was evaluated at zero time (immediately after pouring), at 1 minute and at 2 minutes. Control and treatment samples were run in duplicate and the averaged data is shown in Table 9.

**Table 9. Total Volume of Foam (in mL) in Root Beers with Added Camosic Acid.**

| **Product** | **1 Control** | **1 Treated** | **2 Control** | **2 Treated** | **3 Control** | **3 Treated** | **4 Control** | **4 Treated** |
|---|---|---|---|---|---|---|---|---|
| Zero minutes | 500 | 750 | 100 | 600 | 700 | 800 | 700 | 900 |
| 1 minute | 100 | 400 | 0 | 300 | 400 | 500 | 350 | 500 |
| 2 minute | 0 | 325 | 0 | 150 | 300 | 400 | 325 | 450 |

Foam appearance.
- Root Beer 1 Control-: Foam had a finely bubbled, uniform consistency.
- Root Beer 1 Treatment -: Foam had a finely bubbled, uniform consistency.
- Root Beer 2 Control-: Foam had a finely bubbled, uniform consistency.
- Root Beer 2 Treatment -: Foam had a finely bubbled, uniform consistency.
- Root Beer 3 Control-: Foam had coarse, large irregular bubbles.
- Root Beer 3 Treatment -: Foam had finely bubbled, more uniform consistency.
- Root Beer 4 Control-: Foam had coarse, large irregular bubbles.
- Root Beer 4 Treatment -: Foam had finely bubbled, more uniform consistency.

Four commercial root beers were chosen to be able to evaluate a range of products. Some manufacturers use a yucca root derived saponin to enhance foam. Of the four products tested it appears that two of them - 3 and 4 have added foam enhancers. In all cases there was a very significant enhancement of foam with camosic acid addition. In the saponin-free root beers (1 & 2), the foam disappeared in less than one minute. With the addition of camosic acid to the saponin-free products, there was still substantial foam at the end of two minutes. In the two products thought to contain saponin, the control foam had irregular large bubbles. With added camosic acid, the bubbles were much finer and uniform.

### Example 7 - Use of carnosic acid to enhance the foam of cola-flavored soft drinks.

A 24-ounce bottle of a well-known brand of cola-flavored soft drink was opened, treated with an ethanolic solution of camosic acid resulting in a final concentration of 10 ppm, fobbed and re-sealed. A control was prepared by opening, fobbing and closing a separate bottle. The bottles were subjected to a controlled pour experiment, and the effect of the treatment on the foam was determined. The results are shown in Table 10.

**Table 10. Effect of carnosic acid on foam in a cola-flavored soft drink.**

| **Time \ Treatment** | **Control Foam in mm** | **10 ppm Carnosic Acid Foam in mm** |
|---|---|---|
| Zero minutes | 450 | 900 |
| One Minute | 50 | 700 |
| Two Minutes | 0 | 600 |

Camosic acid has a dramatic effect on foam volume and stability in cola-flavored beverages. An identical experiment, using a lemon-lime-flavored soft drink did not show any effect on foam amount or stability.

### Example 8 - Use of Labiatae herb constituents to enhance the foam in cappuccino.

Milk made up to contain 5 ppm camosic acid is used as an ingredient to make cappuccino, using a commercially available cappuccino maker. The froth on the resulting cappuccino is longer lasting, has superior volume, smaller bubble size and creamier mouth feel than a cappuccino made with untreated milk. A similar effect is obtained when camosic acid is replaced with camosol. A similar effect is also obtained when a mixture of carnosol and camosic acid is used. A more pronounced effect is obtained when higher concentrations of either camosic acid or carnosol are used. Concentrations of up to 100 ppm of the active ingredients are used to good effect. The camosic acid or carnosol can be in the form of purified compounds, or refined *Labiatae* herb extracts, where the active ingredient is present in concentrations of >25%. They are most easily added in the form of solutions or suspensions in a suitable food-grade carrier, such as propylene glycol, ethanol, benzyl alcohol, glycerin, mono and / or diglycerides, lecithin, and the like.

### Example 9 - Use of Labiatae herb constituents to enhance the foam in a hot chocolate beverage.

Milk made up to contain 5 ppm camosic acid is used as an ingredient to make hot chocolate, using a commercially available hot chocolate dispenser. The froth on the resulting beverage is longer lasting, has superior volume, smaller bubble size and creamier mouth feel than a hot chocolate made with untreated milk. A similar effect is obtained when carnosic acid is replaced with camosol. A similar effect is also obtained when a mixture of carnosol and carnosic acid is used. A more pronounced effect is obtained when higher concentrations of either carnosic acid or carnosol are used. Concentrations of up to 100 ppm of the active ingredients are used to good effect. The carnosic acid or carnosol can be in the form of purified compounds, or refined *Labiatae* herb extracts, where the active ingredient is present in concentrations of >25%. They are most easily added in the form of solutions or suspensions in a suitable food-grade carrier, such as propylene glycol, ethanol, benzyl alcohol, glycerin, mono and / or diglycerides, lecithin, and the like.

### LITERATURE REFERENCES

1 Bryce, J.H., Cooper, D.J., Stewart, G.G. "The Potential to improve Foam Stability of High Gravity Brewed Beer" European Brewery Convention on Beer Foam Quality, Monograph 27, October 1998, pages 141-153.
2 Bamforth, Charles W. "Bringing Matters to a Head: The Status of Research on Beer Foam" European Brewery Convention on Beer Foam Quality, Monograph 27, October 1998, pages 10-23.
3 Wilson, R.J.H., Roberts, T.R., Smith, R.J., Bradley, L.L. European Brewery Convention on Beer Foam Quality, Monograph 27, October 1998, pages 188-207.
4 Slack, P.T., Bamforth, C.W. Journal of the Institute of Brewing, 1983, 89, 397-401.
5 Onishi, A., Proudlove, M.O. Journal of the Science of Food and Agriculture, 1994, 65, 233-240.
6 a) Hollemans, M., Tonies, A.R.J.M. Proceedings of the European Brewery Convention Congress, Zurich, 1989, 561-568. b) Gibson, C.E., Evans, D.E., Proudlove, M.O. Ferment, 1996, 9, 81-84. c) Douma, A.C., Mocking-Bode, H.C.M., Koorijman, M., Stolzenbach, E., Orsel, R., Bekkers, A.C.A.P.A., Angelino, S.A.G.F. Proceedings of the European Brewery Convention Congress, Maastricht, 1997, 671-679. d)_Horiuchi, S., Kouno, K., Yamashita, H., Mori, T. Yabuuchi, S. Proceedings of the 23rd Convention of the Institute of Brewing, Asia Pacific Section,1994, 198. e) Sheehan, M., EvansE. Proceedings of the 25th Convention of the Institute of Brewing, Asia Pacific Section, 1998, 198. f) Lusk, L.T., Goldstein, H., Ryder, D. Journal of the American Society of Brewing Chemists, 1995, 53, 93-100.
7 Onishi, A., Canterranne, E., Clarke, D.J., Proudlove, M.O. Proceedings of the European Brewery Convention Congress, Brussels, 1995, 553-560.
8 Clark, D.C., Wilde, P.J., Marion, D. Journal of the Institute of Brewing, 1994, 100, 23-25.
9 Lusk, L.T., Goldstein, H., Ryder, D. Journal of the American Society of Brewing Chemists, 1995, 53, 93-100.
10 Bamforth, C.W., Canterranne, E., Chandley, P. , Onishi, A. Proceedings of the European Brewery Convention Congress, Oslo, 1993, 331-340.
11 Sarker, D.K., Wilde, P.J. and Clark, D.C. Cereal Chemistry, 1994, 75, 493-499.
12Simpson, W.J , Hughes, P.S., Cerevisiae & Biotechnology, 1994, 19, 39-44. ¹³Goldstein, H., Ting, P. Proceedings of the European Brewery Convention Symposium on Hops, 1994, 141-164.
14Forster, A., Beck, B. Schmidt, R. Proceedings of the 24th Convention of the Institute of Brewing, Asia Pacific Section, 1996, 243.
15Sarker, D.K., Wilde, P.J., Clark, D.C. Journal of Agricultural and Food Chemistry, 1995, 43, 295-300.
16Hop Chemistry:Homebrew Science", Steve Parkes, Internet Reference: http://www.byo.com/departments/884.html
17Hayes, P.J., Smyth, M.R., McMurrough, I. Analyst, September 1987, Vol 112, 1197-1204.
18McMurrough, I., Madigan, D., Kelly, R.J, Smyth, M.R.. J.Am.Soc.Brew.Chem., 1996, 54(3), 141-148.
19Internet Source: http://www.micro-ox.com/chem_tan.htm
20Deprez, S. Brezillon, C., Rabot, S., Philippe, C., Mila, I., Lapierre, C., Scalbert, A. Journal of Nutrition, 2000, 130, 2733-2738.

## Claims

1. A method for improving the properties of a beverage foam wherein a foam-enhancing formulation comprising a *Labiatae* herb composition which comprises one or more naturally derived *Labiatae* herb substances selected from carnosic acid, carnosol, rosmariquinone, rosmanol, epi-rosmanol, isorosmanol, rosmaridiphenol, 12-methoxycarnosic acid and esters of carnosic acid is added either directly to a beverage or at a stage in its manufacture in a foam-enhancing amount which is below the flavor threshold.

2. The method of claim 1 wherein the foam enhancement comprises delayed foam collapse, delayed cover break and/or heavy foam cling.

3. The method of claim 1 or claim 2 wherein addition of the foam-enhancing formulation does not result in beverage hazing.

4. The method of any preceding claim wherein the beverage is selected from fermented malt beverages, beer, ale, dry beer, near beer, light beer, low alcohol beer, low calorie beer, porter, bock beer, stout, malt liquor, non-alcoholic malt beverages, beer from which the alcohol has been removed, cappuccino, flavored coffee, tea, hot chocolate and carbonated soft drinks.

5. The method of claim 4 wherein the beverage is a malt beverage or beer.

6. The method of claim 5 wherein the *Labiatae* herb composition is added to the malt beverage or beer at one or more stages of its manufacture selected from:
- prior to the malting process,
- during the malting process,
- prior to the kilning process,
- during to the kilning process,
- prior to the mashing process,
- during the mashing process,
- prior to the lautering process,
- during the lautering process,
- prior to the wort boil process,
- during the wort boil process,
- prior to fermentation,
- during fermentation,
- prior to pasteurization,
- during pasteurization,
- prior to packaging and/or
- during packaging.

7. The method of any preceding claim wherein the *Labiatae* herb composition comprises carnosic acid, carnosol or a mixture thereof.

8. The method of claim 7 wherein the concentration of said carnosic acid, carnosol or mixture thereof in the beverage is between 0.5 and 100 ppm.

9. The method of any preceding claim wherein the foam-enhancing formulation further comprises one or more C₁₀₋₂₄ fatty acids.

10. The method of any preceding claim wherein the foam-enhancing formulation further comprises a hop extract or derivative thereof and/or one or more hop oils or derivatives thereof.

11. The method of claim 10 wherein the hop extract comprises isohumulones, dihydro-isohumulones, tetrahydro-isohumulones, hexahydro-isohumulones or mixtures thereof.

12. The method of any preceding claim wherein the *Labiatae* herb composition is formulated in a food grade carrier comprising propylene glycol, ethanol, water, monoglycerides of fatty acids, diglycerides of fatty acids or glycerin, or a mixture of any of the foregoing.

13. The method of claim 12 wherein the *Labiatae* herb composition is present in the carrier in a concentration range of 0.25% to 50% by weight.

14. The method of claim 13 wherein the *Labiatae* herb composition is present in the carrier in a concentration range of 0.5% to 20% by weight.

## Patentansprüche

1. Verfahren zur Verbesserung der Eigenschaften eines Getränkeschaums, wobei eine schaum-verstärkende Formulierung, die eine *Labiatae*-Kraut-Zusammensetzung umfasst, die eine oder mehrere natürlich vorkommende *Labiatae*-Kraut-Substanzen umfasst, die ausgewählt sind aus Carnosolsäure, Carnosol, Rosmariquinon, Rosmanol, Epi-Rosmanol, Isorosmanol, Rosmaridiphenol, 12-Methoxy-Carnosolsäure und Ether der Carnosolsäure, entweder direkt zu einem Getränk oder in einem Stadium seiner Herstellung in einer schaum-verstärkenden Menge hinzugegeben wird, die unter der Geschmacksschwelle liegt.

2. Das Verfahren nach Anspruch 1, wobei die Schaum-Verstärkung verzögerten Zusammenfall des Schaums, verzögerndes Aufbrechen der Deckschicht und/oder starke Schaumhaftung beinhaltet.

3. Das Verfahren nach Anspruch 1 oder Anspruch 2, wobei das Hinzugeben der schaum-verstärkenden Formulierung nicht zu einer Getränketrübung führt.

4. Das Verfahren nach einem der vorhergehenden Ansprüche, wobei das Getränk ausgewählt ist aus fermentierten Malzgetränken, Bier, Ale, Trockenbier, alkoholfreiem Bier, leichtem Bier, Bier mit niedrigem Alkoholgehalt, Bier mit wenigen Kalorien, Porter, Bockbier, Starkbier, Malzschnaps, nicht-alkoholischen Malzgetränken, Bier aus dem der Alkohol entfernt wurde, Cappuccino, aromatisiertem Kaffee, Tee, heißer Schokolade und kohlensäurehaltigen Erfrischungsgetränken.

5. Das Verfahren nach Anspruch 4, wobei das Getränk ein Malzgetränk oder Bier ist.

6. Das Verfahren nach Anspruch 5, wobei die *Labiatae*-Kraut-Zusammensetzung zu dem Malzgetränk oder Bier in einem oder mehreren Stadien seiner Herstellung hinzugegeben wird, die ausgewählt sind aus:
- vor dem Mälzprozess
- während des Mälzprozesses
- vor dem Darrprozess
- während des Darrprozesses
- vor dem Maischprozess
- während des Maischprozesses
- vor dem Läuterungsprozess
- während des Läuterungsprozesses
- vor dem Würzekochprozess
- während des Würzekochprozesses
- vor der Fermentation
- während der Fermentation
- vor Pasteurisierung
- während der Pasteurisierung
- vor dem Verpacken und/oder
- während des Verpackens.

7. Das Verfahren nach einem der vorhergehenden Ansprüche, wobei die *Labiatae-Kraut-*Zusammensetzung Carnosolsäure, Carnosol oder ein Gemisch davon umfasst.

8. Das Verfahren nach Anspruch 7, wobei die Konzentration der Carnosolsäure, des Carnosols oder einem Gemisch davon in dem Getränk zwischen 0,5 und 100 ppm beträgt.

9. Das Verfahren nach einem der vorhergehenden Ansprüche, wobei die schaum-verstärkende Formulierung weiterhin eine oder mehrere C₁₀₋₂₄ Fettsäuren umfasst.

10. Das Verfahren nach einem der vorhergehenden Ansprüche, wobei die schaum-verstärkende Formulierung weiterhin ein Hopfenextrakt oder ein Derivat davon und/oder ein oder mehrere Hopfenöle oder Derivate davon umfasst.

11. Das Verfahren nach Anspruch 10, wobei der Hopfenextrakt Isohumulone, Dihydro-Isohumulone, Tetrahydro-Isohumulone, Hexahydro-Isohumulone oder Gemische davon umfasst.

12. Das Verfahren nach einem der vorhergehenden Ansprüche, wobei die *Labiatae-Kraut-*Zusammensetzung in einem Träger in Lebensmittelqualität formuliert ist, der Propylenglykol, Ethanol, Wasser, Monoglyceride von Fettsäuren, Diglyceride von Fettsäuren oder Glycerin oder ein beliebiges Gemisch der obigen umfasst.

13. Das Verfahren nach Anspruch 12, wobei die *Labiatae*-Kraut-Zusammensetzung in dem Träger in einem Konzentrationsbereich von 0,25 bis 50 Gewichtsprozent vorhanden ist.

14. Das Verfahren nach Anspruch 13, wobei die *Labiatae*-Kraut-Zusammensetzung in dem Träger in einem Konzentrationsbereicht von 0,5 bis 20 Gewichtsprozent vorhanden ist.

## Revendications

1. Procédé pour améliorer les propriétés de la mousse d'une boisson, dans lequel une formulation améliorant la mousse comprenant une composition d'herbes Labiatae, qui contient une ou plusieurs substances issues d'herbes Labiatae dérivées naturellement choisies parmi l'acide carnosique, le camosol, la rosmariquinone, le rosmanol, l'épirosmanol, l'isorosmanol, le rosmaridiphénol, l'acide 12-méthoxycarnosique et les esters de l'acide carnosique, est ajoutée soit directement à une boisson, soit à un stade de sa fabrication en une quantité améliorant la mousse qui est en-deçà du seuil de flaveur.

2. Procédé selon la revendication 1, dans lequel l'amélioration de la mousse comprend une désagrégation retardée de la mousse, une cassure retardée du chapeaù et/ou une adhérence importante de la mousse.

3. Procédé selon la revendication 1 ou la revendication 2, dans lequel l'ajout de la formulation améliorant la mousse ne rend pas la boisson trouble.

4. Procédé selon l'une quelconque des revendications précédentes, dans lequel la boisson est choisie parmi les boissons au malt férmentées, la bière, l'ale, la bière sèche, la bière sans alcool, la bière allégée, la bière faiblement alcoolisée, la bière faible en calories, la bière porter, la bière bock, la bière stout, la liqueur de malt, les boissons au malt non alcoolisées, la bière dont l'alcool a été enlevé, le cappuccino, le café aromatisé, le thé, le chocolat chaud et les boissons gazéifiées non alcoolisées.

5. Procédé selon la revendication 4, dans lequel la boisson est une boisson au malt ou de la bière.

6. Procédé selon la revendication 5, dans lequel la composition d'herbes Labiatae est ajoutée à la boisson au malt ou à la bière à un ou plusieurs stades de sa fabrication choisis parmi :
- avant le procédé de maltage,
- pendant le procédé de maltage,
- avant le procédé de touraillage,
- pendant le procédé de touraillage,
- avant le procédé d'empâtage,
- pendant le procédé d'empâtage,
- avant le procédé de filtration,
- pendant le procédé de filtration,
- avant le procédé d'ébullition du moût,
- pendant le procédé d'ébullition du moût,
- avant la fermentation,
- pendant la fermentation,
- avant la pasteurisation,
- pendant la pasteurisation,
- avant le conditionnement et/ou
- pendant le conditionnement.

7. Procédé selon l'une quelconque des revendications précédentes, dans lequel la composition d'herbes Labiatae comprend de l'acide carnosique, du carnosol ou un mélange de ceux-ci.

8. Procédé selon la revendication 7, dans lequel la concentration dudit acide carnosique, carnosol ou mélange de ceux-ci dans la boisson est comprise entre 0,5 et 100 ppm.

9. Procédé selon l'une quelconque des revendications précédentes, dans lequel la formulation améliorant la mousse comprend en outre un ou plusieurs acides gras en C₁₀₋₂₄.

10. Procédé selon l'une quelconque des revendications précédentes, dans lequel la formulation améliorant la mousse comprend en outre un extrait de houblon ou un dérivé de celui-ci et/ou une ou plusieurs huiles de houblon ou dérivés de celles-ci.

11. Procédé selon la revendication 10, dans lequel l'extrait de houblon comprend des isohumulones, des dihydro-isohumulones, des tétrahydro-isohumulones, des hexahydro-isohumulones ou des mélanges de celles-ci.

12. Procédé selon l'une quelconque des revendications précédentes, dans lequel la composition d'herbes Labiatae est formulée dans un véhicule de classe alimentaire comprenant du propylène glycol, de l'éthanol, de l'eau, des monoglycérides d'acides gras, des diglycérides d'acides gras ou de la glycérine, ou un mélange quelconque de ceux-ci.

13. Procédé selon la revendication 12, dans lequel la composition d'herbes Labiatae est présente dans le véhicule dans une plage de concentrations de 0,25 % à 50 % en poids.

14. Procédé selon la revendication 13, dans lequel la composition d'herbes Labiatae est présente dans le véhicule dans une plage de concentrations de 0,5 % à 20 % en poids.
